(19) Europäisches Patentamt
European Patent Office
Office européen des brevets

(11) EP 0 673 104 B1

(12) EUROPÄISCHE PATENTSCHRIFT

(45) Veröffentlichungstag und Bekanntmachung des Hinweises auf die Patenterteilung:
**07.07.1999 Patentblatt 1999/27**

(51) Int Cl.6: **H02K 15/12**, C08G 59/68

(21) Anmeldenummer: **95810138.8**

(22) Anmeldetag: **03.03.1995**

(54) **Ein-Komponenten-Epoxidharz-Systeme für das Träufelverfahren und Heisstauchrollierverfahren**

One component epoxy systems for drip process and hot dipping burnish method

Système de résine époxyde à une composante pour l'application goutte-à-goutte et pour un procédé de roulage par méthode d'immersion à chaud

(84) Benannte Vertragsstaaten:
**CH DE ES FR GB IT LI**

(30) Priorität: **16.03.1994 CH 78194**

(43) Veröffentlichungstag der Anmeldung:
**20.09.1995 Patentblatt 1995/38**

(73) Patentinhaber: **Ciba Specialty Chemicals Holding Inc.**
**4057 Basel (CH)**

(72) Erfinder:
- **Moser, Roland**
  **CH-4058 Basel (CH)**
- **Bär, Daniel**
  **CH-4125 Riehen (CH)**
- **Mayer, Carl W.,Dr.**
  **CH-4125 Riehen (CH)**

(56) Entgegenhaltungen:
**EP-A- 0 066 543**
**EP-A- 0 504 569**
**EP-A- 0 540 466**
**DE-A- 3 230 426**
**US-A- 4 391 947**
**US-A- 4 472 482**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 673 104 B1

## Beschreibung

Die vorliegende Erfindung betrifft ein Verfahren zur Fixierung von Drahtwicklungen durch Auftropfen eines Imprägnierharzes auf die erwärmte rotierende Drahtwicklung oder durch Eintauchen der erwärmten rotierenden Drahtwicklung in ein mit einem Imprägnierharz gefülltes Bad, das dadurch gekennzeichnet ist, dass als Imprägnierharz eine Zusammensetzung enthaltend ein Epoxidharz und einen blockierten Polymerisationsinitiator verwendet wird.

Drahtwicklungen von Rotoren oder Statoren werden häufig zum Schutz vor störenden Umwelteinflüssen und zur Erhöhung der mechanischen Festigkeit mit geeigneten Isolierharzen imprägniert. So müssen beispielsweise bei der Herstellung von Elektromotoren die Drahtwicklungen mittels eines Elektroisolierlacks auf einem Träger fixiert werden.

Ein herkömmliches Verfahren zur Imprägnierung von Drahtwicklungen ist das Tauchimprägnieren, wobei lösungsmittelhaltige Imprägnierlacke verwendet werden. Das Tauchimprägnierverfahren lässt sich allerdings nicht gut in eine kontinuierliche Fertigung einbeziehen, da das Abtropfen und das Verdunsten des Lösungsmittels viel Zeit beanspruchen. Eine gute Imprägnierung ist nur durch mehrmaliges Tauchen und unter Anwendung von Vakuum zu erreichen. Ausserdem ist die Verwendung lösungsmittelhaltiger Lacke ökologisch bedenklich.
Aus diesen Gründen werden heute vermehrt Verfahren wie das Träufelverfahren und das Heisstauchrollierverfahren angewendet, wobei lösungsmittelfreie Imprägnierharze verwendet werden.

Beim Träufelverfahren wird das Imprägnierharz auf die erwärmte, mässig schnell rotierende Wicklung bis zur völligen Durchtränkung aufgetropft. Die anschliessende Härtung kann, je nach verwendetem Träufelharz, kalt oder bei höheren Temperaturen erfolgen.

Auch beim Heisstauchrollierverfahren wird der Rotor bzw. Stator in einem Ofen vorgewärmt (Ofentemperatur: ca. 200 °C). Anschliessend wird der erwärmte Rotor oder Stator in einer Vorrichtung fixiert und rotierend in ein mit dem Imprägnierharz gefülltes Tränkbad eingetaucht. Nach vollständiger Durchtränkung der Wicklungen wird der Rotor bzw. Stator aus dem Imprägnierbad entfernt, wobei die Rotation bis zur Gelierung der Tränkmasse beibehalten wird. Gegebenenfalls ist eine Nachhärtung in einem Ofen erforderlich.

Im Träufelverfahren und Heisstauchrollierverfahren werden häufig ungesättigte Polyesterharze und Epoxidharze verwendet (siehe z.B. H. Batzer: "Polymere Werkstoffe", Georg Thieme Verlag 1984, Band III, Seite 307-309). Hierbei handelt es sich jedoch um Zwei-Komponenten-Systeme, d.h. Harz und Härter müssen getrennt voneinander gelagert werden und werden erst kurz vor der Applikation gemischt. Bei diesen Systemen ist also vor der Imprägnierung ein relativ aufwendiger Dosier- und Mischprozess erforderlich. Ausserdem ist die Verarbeitungsdauer nach Mischen der einzelnen Komponenten, das sogenannte "Pot-Life", bei Zwei-Komponenten-Harzen oftmals zu kurz.

Deshalb besteht ein Bedarf an Ein-Komponenten-Imprägniersystemen, die bei Raumtemperatur lagerstabil sind und ohne vorherige Mischprozesse direkt im Träufel- bzw. Heisstauchrollierverfahren einsetzbar sind.
Geeignete Ein-Komponenten-Systeme sind beispielsweise die in der DE-A 1445263 beschriebenen Polyesterimide. Die mechanischen Eigenschaften, insbesondere die Flexibilität, der ausgehärteten Polyesterimidharze sind jedoch wesentlich schlechter als die von entsprechenden Epoxidharzen. Ausserdem ist die Verwendung von Polyesterimiden wegen des hohen Anteils an flüchtigen Produkten toxikologisch bedenklich.

Unerwarteterweise wurde nun gefunden, dass Epoxidharze in Kombination mit bestimmten blockierten Polymerisationsinitiatoren als lagerstabile Ein-Komponenten-Imprägnierharze verwendet werden können, die ein langes Pot-Life aufweisen und gehärtete Produkte mit ausgezeichneten mechanischen Eigenschaften liefern. Auch aus toxikologischen bzw. ökologischen Gründen ist die Verwendung solcher Harze im Träufel- oder Heisstauchrollierverfahren vorteilhaft, da praktisch keine flüchtigen Spaltprodukte auftreten.

Gegenstand der vorliegenden Erfindung ist ein Verfahren zur Fixierung von Drahtwicklungen durch Auftropfen eines Imprägnierharzes auf die erwärmte rotierende Drahtwicklung oder durch Eintauchen der erwärmten rotierenden Drahtwicklung in ein mit einem Imprägnierharz gefülltes Bad, dadurch gekennzeichnet, dass als Imprägnierharz eine Zusammensetzung enthaltend

(A) ein Epoxidharz und
ein durch Wärme aktivierbarer Initiator aus einem Gemisch enthaltend

(a) mindestens ein quartäres Ammoniumsalz einer aromatisch-heterocyclischen Verbindung, die 1 oder 2 N-Atome enthält, und eines komplexen Halogenidanions ausgewählt aus der Gruppe bestehend aus $BF_4^{\ominus}$, $PF_6^{\ominus}$, $SbF_6^{\ominus}$, $SbF_5(OH)^{\ominus}$ und $AsF_6^{\ominus}$, und
(b) mindestens einen thermischen Radikalbildner (b1), (b2), (b3) oder (b4) ist, wobei

(b1) ein Diarylethanderivat der Formel III

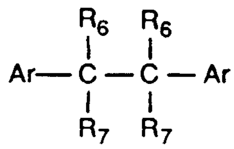

(III),

darstellt, worin Ar Phenyl, Naphthyl oder durch $C_1$-$C_4$-Alkyl oder Chlor substituiertes Phenyl ist,

$R_6$ für Hydroxy, $C_1$-$C_4$-Alkoxy, -O-CO-$R_8$ oder -OSi$R_9R_{10}R_{11}$ steht, worin $R_8$ $C_1$-$C_8$-Alkyl oder Phenyl und $R_9$, $R_{10}$ und $R_{11}$ unabhängig voneinander $C_1$-$C_4$-Alkyl oder Phenyl bedeuten und $R_7$ $C_1$-$C_4$-Alkyl oder Cyclohexyl ist oder die gleiche Bedeutung wie Ar hat,

(b2) für eine oligomere Verbindung der Formel IV

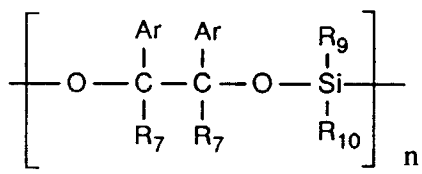

(IV),

steht, worin Ar, $R_7$, $R_9$ und $R_{10}$ die gleiche Bedeutung wie in Formel II haben und n 2-20 ist,
(b3) eine organische Peroxyverbindung darstellt und
(b4) ein Chinon ist.

Als Komponente (A) kann in dem erfindungsgemässen Verfahren im Prinzip jede in der Technik der Epoxidharze übliche Verbindung eingesetzt werden. Geeignete Epoxidharze sind beispielsweise:

I) Polyglycidyl- und Poly(β-methylglycidyl)ester erhältlich durch Umsetzung einer Verbindung mit mindestens zwei Carboxylgruppen im Molekül mit Epichlorhydrin bzw. β-Methyl-epichlorhydrin. Die Umsetzung erfolgt zweckmässig in der Gegenwart von Basen.
Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen mit Epichlorhydrin oder β-Methylepichlorhydrin unter alkalischen Bedingungen, oder in Anwesenheit eines sauren Katalysators mit anschliessender Alkalibehandlung.
Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
Sie leiten sich aber auch beispielsweise ab von cycloaliphatischen Alkoholen, wie 1,3-oder 1,4-Dihydroxycyclohexan, 1,4-Cyclohexandimethanol,
Bis(4-hydroxycyclohexyl)methan, 2,2-Bis(4-hydroxycyclohexyl)propan, oder 1,1-Bis-(hydroxymethyl)-cyclohex-3-en, oder sie besitzen aromatische Kerne, wie N,N-Bis(2-hydroxyethyl)anilin oder p,p'-Bis(2-hydroxyethylamino) diphenylmethan.
Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie auf Novolaken erhältlich durch Kondensation von Aldehyden, wie Formaldehyd, Acetaldehyd, Chloral oder Furfuraldehyd, mit Phenolen, wie insbesondere Phenol oder Kresol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol oder erhältlich durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan. Zu den Poly(N-glycidyl)verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)-propan.

Vorzugsweise werden Epoxidharze auf Basis von Bisphenoldiglycidylethern eingesetzt, insbesondere Bisphenol A- oder Bisphenol F-diglycidylether.

Als Komponente A sind ausserdem Epoxidharze basierend auf Polyglycidylestern von Polycarbonsäuren bevorzugt, insbesondere Phthalsäurediglycidylester, Hexahydrophthalsäurediglycidylester oder Trimellitsäuretriglycidylester.

Weitere bevorzugte Komponenten A sind Epoxidharz auf Basis von Trimethylolpropantriglycidylether oder cycloaliphatische Epoxidharze.

Die im erfindungsgemässen Verfahren eingesetzten Imprägnierharze sind lagerstabile Ein-Komponenten-Systeme; d.h. Epoxidharz und Härter bzw. Polymerisationsinitiator reagieren bei Raumtemperatur nicht miteinander und brauchen daher nicht getrennt gelagert zu werden. Dies macht die Verwendung von sogenannten "blockierten" Initiatoren erforderlich, die normalerweise gegenüber Epoxiden inert sind und erst nach einer "Deblockierung" die Polymerisation des Epoxidharzes katalysieren. Diese Deblockierung kann, je nach Art des verwendeten Initiators, durch UV-Strahlung und/oder Erhitzen auf hohe Temperaturen erfolgen.

Als thermische Polymerisationsinitiatoren B können die in der EP-A 0 066 543 beschriebenen Gemische aus heterocyclischenen Ammoniumsalzen (a) und thermischen Radikalbildnern (b) eingesetzt werden.

Die erfindungsgemäss als Komponente (a) verwendeten quartären Ammoniumsalze sind Salze von aromatisch-heterocyclischen Stickstoffbasen mit komplexen Halogenid-Anionen. Beispiele für aromatisch-heterocyclische Stickstoffbasen sind vor allem sechsgliedrige Stickstoff-Heterocyclen wie Pyridin, Pyrimidin, Pyridazin und Pyrazin und deren Alkyl- oder Arylderivate, Benzo- und Naphthoderivate wie z.B. Picolin, Lutidin, Chinolin, Isochinolin, Chinoxalin, Phthalazin, Chinazolin, Acridin, Phenanthridin oder Phenanthrolin.

Bevorzugt als Komponente (a) sind Ammoniumsalze der Formeln V, VI oder VII

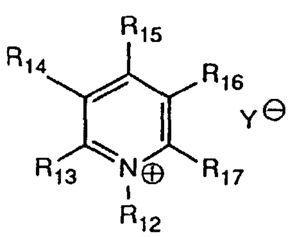 (V), 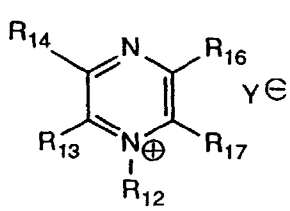 (VI), 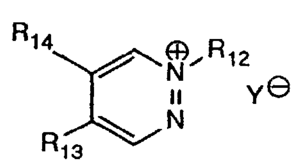 (VII),

worin $R_{12}$ $C_1$-$C_{12}$-Alkyl, $C_7$-$C_{20}$-Aralkyl, $C_3$-$C_{15}$-Alkoxyalkyl oder Benzoylmethyl ist, $R_{13}$, $R_{14}$, $R_{15}$, $R_{16}$ und $R_{17}$ unabhängig voneinander Wasserstoff, $C_1$-$C_4$-Alkyl oder Phenyl bedeuten, oder $R_{13}$ und $R_{14}$ oder $R_{14}$ und $R_{15}$ oder $R_{15}$ und $R_{16}$ oder $R_{16}$ und $R_{17}$ zusammen mit den beiden C-Atomen, an die sie gebunden sind, einen annelierten Benzo-,

Naphtho-, Pyridino- oder Chinolinrest bedeuten, und Y für $BF_4$, $PF_6$, $SbF_6$ $SbF_5(OH)$ oder $AsF_6$ steht.

Beispiele für Verbindungen der Formeln V-VII sind:

1-Methylchinoliniumhexafluorophosphat, 1-Methylchinoliniumhexafluoroantimonat, 1-Methylchinoliniumhexafluoroarsenat, 1-Methylchinoliniumpentafluorohydroxyantimonat, 1-Methylchinoliniumtetrafluoroborat, 1,2-Dimethylchinoliniumhexafluorophosphat, 1-Ethylchinoliniumhexafluorophosphat, 1-Butylchinoliniumhexafluorophosphat, 1-Benzoylmethylchinoliniumhexafluorophosphat, 1-Benzoylmethylchinoliniumhexafluoroantimonat, 1-Benzylchinoliniumhexafluoroantimonat,
1-Methyl-2,3-diphenylpyridiniumhexafluorophosphat, 1,2-Dimethyl-3-phenylpyridiniumhexafluorophosphat, 1-Benzoylmethylpyridiniumhexafluorophosphat,
1-Ethoxyethylchinoliniumhexafluorophosphat, 2-Methylisochinoliniumhexafluorophosphat, 10-Methylacridiniumhexafluorophosphat, 10-Benzoylmethylacridiniumhexafluorophosphat, 10-Butylacridiniumhexafluoroarsenat, 5-Methylphenanthridiniumhexafluorophosphat, 5-Benzoylmethylphenanthddiniumhexafluorophosphat, 1-Methylnaphthyridiumhexafluorophosphat, 1-Methyl-2,5-diphenylchinoxaliniumhexafluorophosphat, 1,2,3-Trimethylchinoxaliniumhexafluorophosphat,
1,2,4,6-Tetramethylpyrimidiniumhexafluorophosphat, 1-Methyl-2,4-diphenylpyrimidiniumhexafluorophosphat, 1-Methyl-3-phenylpyridaziniumhexafluorophosphat,
1-Methyl-25-diphenylpyridaziniumhexafluorophosphat, 1-Methylphenanthroliniumhexafluorophosphat, 5-Butylphenaziniumhexafluorophosphat, 1-Methylchinoxaliniumhexafluorophosphat und 1-Benzoylmethylchinoxaliniumhexafluorophosphat.

Besonders bevorzugt als Komponente (a) ist N-Benzylchinoliniumhexafluoroantimonat.

Der thermische Polymerisationsinitiator B benötigt ausser der Komponente (a) mindestens einen thermischen Radikalbildner (b1), (b2), (b3) oder (b4), wobei natürlich auch Gemische verschiedener Radikalbildner eingesetzt werden können.

Die Diarylethanderivate (b1) sind Pinakole und deren Ether, Ester oder Silylderivate. Diese Verbindungen sind bekannt und können nach bekannten Verfahren hergestellt werden. So werden beispielsweise Ketone zu den entsprechenden Pinakolen reduziert. Aus diesen können die Derivate durch Veretherung, Veresterung oder Silylierung gewonnen werden.

Beispiele für Verbindungen der Formel III, die als Komponente (b1) verwendet werden können, sind 1,1,2,2-Tetraphenyl-1,2-ethandiol (Benzpinakol), Benzpinakoldimethylether, -diethylether, diisopropylether, -diacetat, dipropionat, -dibutyrat, -dicaprylat oder -dibenzoat, 1,2-Di-(trimethylsiloxy)-tetraphenylethan, Acetophenonpinakoldimethylether, -dipropylether, -diacetat, -divalerat oder -dibenzoat, Propiophenonpinakoldimethylether, -dibutylether, -diacetat, 2,3-Diphenyl-2,3-bis(triphenylsiloxy)-butan oder 3,4-Diphenyl-3,4-bis(trimethylsiloxy)-hexan.

Bevorzugte Komponenten (b1) sind die Pinakole wie Acetophenonpinakol oder insbesondere 1,1,2,2-Tetraphenyl-1,2-ethandiol (Benzpinakol).

Die Verbindungen der Formel (IV) sind oligomere Silylether von Pinakolen mit einem Molekulargewicht von etwa 500-5000. Beispiele für geeignete Verbindungen der Formel (IV) sind die Umsetzungsprodukte von Benzophenon, Propiophenon oder Acetophenon mit Dichlordimethylsilan oder Dichlordiphenylsilan in Gegenwart von Magnesium. Bevorzugt sind Verbindungen der Formel (IV), worin $R_7$ Phenyl ist und $R_9$ und $R_{10}$ Methyl sind.

Des weiteren können als thermische Radikalbildner (b) auch organische Peroxidverbindungen (b3) verwendet werden. Hierbei kann es sich um Diorganoperoxide oder Monoorganohydroperoxide handeln. Der organische Rest kann insbesondere ein Alkyl-, Cycloalkyl-, Aralkyl-, Acyl- oder Aroylrest sein. Diese Verbindungen sind bekannt und zum Teil im Handel erhältlich.
Als Beispiele seien genannt:
Dibenzoylperoxid, Dilauroylperoxid, Dicumylperoxid, Di-tert.-butylperoxid, Cumylhydroperoxid, Tert.-butylhydroperoxid, Cumyl-tert.-butylperoxid, Tert.-butylperbenzoat, Cyclohexanonperoxid, 2-Butanonhydroperoxid, Acetylacetonperoxid, Tert.-butylperoctoat oder Tert.-butylperacetat.

Schliesslich können als thermische Radikalbildner (b) auch Chinone (b4) verwendet werden, wie beispielsweise Benzochinon, Naphthochinon, Tetrachlorbenzophenon, 2,3-Dichlornaphthochinon, Anthrachinon oder Tetrachloranthrachinon. Bevorzugt wird 2,3-Dichlor-5,6-dicyanobenzochinon verwendet

Die als Komponente (b) geeigneten Verbindungen sind bei Raumtemperatur stabil und zerfallen beim Erhitzen in Radikale. Geschieht dies in Gegenwart von Ammoniumsalzen der Komponente (a), so bilden sich Initiatoren für kationische Polymerisationen, deren genaue Struktur nicht sicher bekannt ist. Die Komponenten (a) und (b) allein vermögen nicht, die Polymerisation des Epoxidharzes (A) zu initiieren, auch nicht bei erhöhter Temperatur. Bei Verwendung eines Gemisches aus (a) und (b) jedoch können Epoxidharze durch einfaches Erhitzen in kurzer Zeit vollständig polymerisiert werden. Gemische aus einem Epoxidharz (A) und einem Initiator (B2), welcher ein Gemisch aus einem heterocyclischen Ammoniumsalz (a) und einem thermischen Radikalbildner (b) ist, sind bei Raumtemperatur

beständige Ein-Komponenten-Systeme. Zur Polymerisation ist Erhitzen auf ca. 60-200 °C, vorzugsweise 100-160 °C, erforderlich.

Die zur Polymerisation benötigte Menge der beiden Komponenten (a) und (b) hängt von der Art des Epoxidharzes (A) und den Polymerisationsbedingungen ab. Im allgemeinen werden jeweils 0,05-8,0 Gew.-%, vorzugsweise 0,1-5,0 Gew.-%, der beiden Komponenten (a) und (b) eingesetzt, bezogen auf die Menge des Epoxidharzes (A). Besonders bevorzugt werden 1,0-5,0 Gew.-%, insbesondere 1,0-2,0 Gew.-%, der Komponente (a) und 1,0-2,0 Gew.-% der Komponente (b) verwendet.

Der Polymerisationsinitiator (B) wird im allgemeinen in einer Menge von 0,05-8,0 Gew.-%, vorzugsweise 0,5-5,0 Gew.-%, insbesondere 1,0-2,5 Gew.-%, bezogen auf die Menge des Epoxidharzes (A), eingesetzt.

Das Einmischen der Initiatorkomponente (B) in das Epoxidharz (A) kann mit üblichen Mitteln, wie mit Rührern, Walzen oder Knetern, durchgeführt werden und erfolgt vorzugsweise bei Temperaturen unterhalb von 50 °C.

Falls zweckmässig, wird dem Gemisch der Komponenten (A) und (B) ein hochsiedendes Lösungsmittel als Lösungsvermittler beigegeben. Üblicherweise wird der Lösungsvermittler in einer Menge von 2-25 Gew.-%, vorzugsweise 4-20 Gew.-%, bezogen auf das Epoxidharz (A), eingesetzt.
Ein bevorzugter Lösungsvermittler ist Propylencarbonat.

Als weitere übliche Zusätze können die erfindungsgemässen Imprägnierharze ferner Weichmacher, Streckmittel, Pigmente und Farbstoffe, wie Russ, Oxidfarben und Titandioxid, sowie Flammschutzmittel, Entschäumungsmittel, Thixotropiemittel, Verlaufmittel, Haftvermittler und Antioxidantien enthalten.

Die so erhaltenen Ein-Komponenten-Imprägnierharze besitzen eine niedrige Viskosität, sind bei Temperaturen bis ca. 50 °C lagerstabil und weisen auch nach Deblockierung der Initiatoren (A) durch UV-Strahlung bzw. Wärme eine ausgezeichnete Verarbeitungsdauer (Pot-Life) bei Temperaturen bis ca. 40 °C auf. Ausserdem ist die Gelierzeit der Imprägnierharze sehr kurz, was für die kontinuierliche Fertigung von Vorteil ist.
Das erfindungsgemässe Imprägniersystem weist ausgezeichnete Benetzungseigenschaften auf und benötigt, im Gegensatz zu herkömmlichen Polyimid-Imprägnierharzen, keine zusätzlichen Benetzungsmittel.
Auch gegebenenfalls vorhandene Papier- oder Kartonschichten werden problemlos imprägniert.

Der zu imprägnierende Rotor oder Stator wird vor der Imprägnierung in einem Ofen erwärmt, so dass die Temperatur der Wicklungen bei Beginn der Imprägnierung 110-200 °C beträgt.
Bei Verwendung eines UV-aktivierbaren Initiators (B1) beträgt die Temperatur der Wicklungen vorzugsweise 110-150 °C, insbesondere 120-140 °C.
Bei Verwendung eines thermisch aktivierbaren Initiators (B2) beträgt die Temperatur der Wicklungen vorzugsweise 140-200 °C, insbesondere 150-190 °C.

Nach der Imprägnierung der Drahtwicklungen mittels des Träufelverfahrens oder Heisstauchrollierverfahrens wird im allgemeinen eine Aushärtung bei hohen Temperaturen in einem Ofen durchgeführt. Die Härtung erfolgt im allgemeinen bei Temperaturen unterhalb von 200 °C, insbesondere im Bereich von 50-180 °C.

Ein Vorteil des erfindungsgemässen Verfahrens liegt jedoch darin, dass bei guter Abstimmung des vorgewärmten Rotors und der Reaktivität des Ein-Komponenten-Systems auf eine Nachhärtung verzichtet werden kann; die beim Vorwärmen des Rotors eingebrachte Wärme bewirkt eine Vernetzungsreaktion bis weit über den Gelbereich. Die endgültige Aushärtung erfolgt dann "on the job", d.h. beim Betrieb des Rotors bzw. Stators.

Die gehärteten Produkte zeichnen sich durch gute mechanische und elektrische Eigenschaften aus. Gegenüber den konventionellen Verfahren mit Ein-Komponenten-Imprägnierharzen, beispielsweise auf Basis von Polyesterimiden, besitzt das erfindungsgemässe Verfahren weiterhin den Vorteil, dass flüchtige Spaltprodukte nicht oder nur in sehr geringer Menge freigesetzt werden; d.h. die Geruchsbelästigung und die Belastung der Luft mit Schadstoffen werden wesentlich verringert.

In den nachfolgenden Beispielen werden die folgenden Komponenten verwendet:

| | |
|---|---|
| Epoxidharz 2: | flüssiger Hexahydrophthalsäurediglycidylester, Epoxidgehalt: 5,6-6,2 val/kg; |
| Initiator C: | Mischung aus 56 Gew.-Teilen N-Benzylchinoliniumhexafluoroantimonat und 44 Gew.-Teilen 1,1,2,2-Tetraphenyl-1,2-ethandiol; |
| Initiator D: | Mischung aus 53 Gew.-Teilen N-Benzylchinoliniumhexafluoroantimonat, 42 Gew.-Teilen 1,1,2,2-Tetraphenyl-1,2-ethandiol und 5 Gew.-Teilen 2-Ethyl-2-hydroxymethyl-1,3-propandiol; |

Die in Tabelle 1 angegebenen Eigenschaften werden nach folgenden Testmethoden bestimmt:

Viskosität:
Rheomat 115 A, Mess-System 114 (koaxial);

Gelierzeit:
DIN 16945, Gel timer Gelnorm der Firma GEL INSRUMENT AG (Schweiz);

Glasübergangstemperatur $T_g$:
gemäss IEC 15a, Mettler TA 3000, Aufheizgeschwindigkeit 10 °C/min;

Biegefestigkeit, Dehnung, Elastizitätsmodul:
ISO 178;

Schlagbiegefestigkeit:
ISO 179/1D;

Beispiel 4:

1,37 g Initiator C werden bei Raumtemperatur unter sehr starkem Rühren (Dissolver) in 97,63 g Epoxidharz 2 gelöst. Nach ca. 1-1,5 h wird eine klare Lösung erhalten, die nun ohne vorherige Aktivierung auf konventionelle Weise im Träufelverfahren eingesetzt wird. Die Eigenschaften der Mischung und des ausgehärteten Formkörpers sind in Tabelle 1 angegeben.

Beispiel 5:

Analog zu Beispiel 4 wird eine Formulierung aus Epoxidharz 2 und Initiator D hergestellt. Die Eigenschaften der Mischung und des ausgehärteten Formkörpers sind in Tabelle 1 angegeben.

Tabelle 1:

| Beispiel | 4 | 5 |
|---|---|---|
| Epoxidharz 2 [g] | 97,63 | 97,52 |
| Initiator C [g] | 2,37 | |
| Initiator D [g] | | 2,48 |
| Propylencarbonat [g] | - | - |
| Viskosität bei 25 °C [mPa · s] | | |
| der frisch zubereiteten Mischung | 780 | 730 |
| nach 1 Monat Lagerung bei RT | 780 | 730 |
| nach 3 Monaten Lagerung bei RT | 780 | |
| nach 1 Monat Lagerung bei 60 °C | | 830 |
| nach 3 Monaten Lagerung bei 60 °C | | |
| Gelierzeit bei 80 °C | >24h | >24h |
| bei 100 °C | 4h 04' | 3h 49' |
| bei 120 °C | 27' 10" | 24' 10" |
| bei 160 °C | 2' 40" | 2' 20" |
| bei 180°C | 50" | 40" |
| Viskosität nach UV-Bestrahlung | | |
| nach 1 Tag Lagerung bei RT | | |
| nach 1 Monat Lagerung bei RT | | |
| Härtungsbedingungen | 5h/100°C<br>3h/160°C | 5h/100°C<br>3h/160°C |

Tabelle 1: (fortgesetzt)

| Beispiel | 4 | 5 |
|---|---|---|
| Eigenschaften der gehärteten Mischung | | |
| Schlagbiegefestigkeit [$kJ/m^2$] | 23,8 | 15,5 |
| Elastizitätsmodul [$N/mm^2$] | 3570 | 3660 |
| Biegefestigkeit [$N/mm^2$] | 148 | 148 |
| Dehnung [%] | 6,2 | 6,8 |
| Glasübergangstemperatur $T_g$ [°C] | 91 | 74 |

Beispiel 6: Pot-Life

In einem Sulfierkolben ausgerüstet mit Rührer (250 U/min) und zwei Gaseinleitungsrohren, welche als Zulauf bzw. Ablauf dienen, werden 500 g des Ein-Komponenten-Epoxidharzsystems gemäss Beispiel 4 vorgelegt und in einem Wasserbad auf 25 °C erwärmt. Das Harz wird mit Hilfe einer Quetschpumpe (450 U/min) durch ein auf 180 °C erwärmtes Ölbad gefördert uns anschliessend wieder in den Sulfierkolben zurückgeleitet. Nach Einstellung des Gleichgewichts wird im Sulfierkolben ein Temperaturanstieg auf 27 °C (Lagertemperatur) gemessen.
Nach 10 Tagen im Badkreislauf wird nur eine geringe Viskositätserhöhung und Abnahme der Gelierzeit gemessen.

| | | |
|---|---|---|
| Anfangsviskosität bei 25 °C | | 890 mPa·s |
| Viskosität nach 10 d im Badkreislauf | | 920 mPa·s |
| Viskositätsaufbau | | 3,3 % |
| Gelierzeit bei 160 °C | | |
| zu Beginn | 2'40" | |
| nach 10 d im Badkreislauf | 2'26" | |

Beispiel 7: Heisstauchrollierverfahren

Der zu imprägnierende Rotor wird in einem Ofen bei 200 °C vorgewärmt und anschliessend in eine Bohrmaschine eingespannt. Unter ständigem Rotieren (250 U/min) wird der Rotor 10-15 Sekunden in ein mit 50 g Imprägnierharz gemäss Beispiel 4 gefülltes Tränkbad eingetaucht, so dass nur die Wicklungen imprägniert werden. Danach wird der immer noch rotierende Rotor aus dem Tränkbad entfernt, und unter ständiger Rotation geliert die Tränkmasse. Nach dem Abkühlen wird eine Glasübergangstemperatur $T_g$ von 80 °C gemessen.
Die Nachhärtung (3h/160 °C) bewirkt nur einen geringfügige Erhöhung des $T_g$-Werts auf 85 °C.

Beispiel 8: Träufelverfahren

Ein auf 200 °C vorgewärmter Rotor wird waagerecht in eine Bohrmaschine (250 U/min) eingespannt. Das Imprägnierharz gemäss Beispiel 4 wird nun nach dem Zweistromprinzip auf beide Wicklungsköpfe des vorgewärmten, rotierenden Ankers (ca. 190 °C) aufgeträufelt, bis die gesamte Wicklung vollständig durchtränkt ist. Dies ist gegeben, wenn das Imprägnierharz an den Enden der Wicklungen abtropft. Man lässt den imprägnierten Rotor während des Abkühlens weiter rotieren, wobei die Träufelmasse innerhalb von 2-3 Minuten geliert. Nach dem Abkühlen wird eine $T_g$ von 81 °C gemessen.
Die Nachhärtung (3h/160 °C) bewirkt nur einen geringfügige Erhöhung des $T_g$-Werts auf 86 °C.

## Patentansprüche

1. Verfahren zur Fixierung von Drahtwicklungen durch Auftropfen eines Imprägnierharzes auf die erwärmte rotierende Drahtwicklung oder durch Eintauchen der erwärmten rotierenden Drahtwicklung in ein mit einem Imprägnierharz gefülltes Bad, dadurch gekennzeichnet, dass als Imprägnierharz eine Zusammensetzung enthaltend

(A) ein Epoxidharz und
ein durch Wärme aktivierbarer Initiator aus einem Gemisch enthaltend

(a) mindestens ein quartäres Ammoniumsalz einer aromatisch-heterocyclischen Verbindung, die 1 oder 2 N-Atome enthält, und eines komplexen Halogenidanions ausgewählt aus der Gruppe bestehend aus $BF_4^{\ominus}$,$PF_6^{\ominus}$, $SbF_6^{\ominus}$, $SbF_5(OH)^{\ominus}$ und $AsF_6^{\ominus}$, und
(b) mindestens einen thermischen Radikalbildner (b1), (b2), (b3) oder (b4) ist, wobei
(b1) ein Diarylethanderivat der Formel III

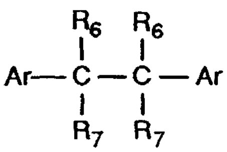

(III),

darstellt, worin Ar Phenyl, Naphthyl oder durch $C_1$-$C_4$-Alkyl oder Chlor substituiertes Phenyl ist,
$R_6$ für Hydroxy, $C_1$-$C_4$-Alkoxy, -O-CO-$R_8$ oder -OSi$R_9R_{10}R_{11}$ steht, worin $R_8$ $C_1$-$C_8$-Alkyl oder Phenyl und $R_9$, $R_{10}$ und $R_{11}$ unabhängig voneinander
$C_1$-$C_4$-Alkyl oder Phenyl bedeuten und
$R_7$ $C_1$-$C_4$-Alkyl oder Cyclohexyl ist oder die gleiche Bedeutung wie Ar hat,
(b2) für eine oligomere Verbindung der Formel IV

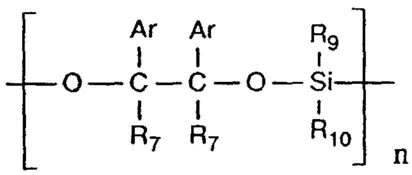

(IV),

steht, worin Ar, $R_7$, $R_9$ und $R_{10}$ die gleiche Bedeutung wie in Formel II haben und n 2-20 ist,
(b3) eine organische Peroxyverbindung darstellt und
(b4) ein Chinon ist.

**2.** Verfahren nach Anspruch 1, dadurch gekennzeichnet, dass als Komponente (A) ein Epoxidharz auf Basis von Bisphenol A-diglycidylether, Bisphenol F-diglycidylether oder eines Gemisches von Bisphenol A-diglycidylether und Bisphenol F-diglycidylether verwendet wird.

**3.** Verfahren nach Anspruch 1, dadurch gekennzeichnet, dass als Komponente (A) ein Epoxidharz auf Basis von Phthalsäurediglycidylester, Hexahydrophthalsäurediglycidylester oder Trimellitsäuretriglycidylester verwendet wird.

**4.** Verfahren nach Anspruch 1, dadurch gekennzeichnet, dass als Komponente (A) ein Epoxidharz auf Basis von Trimethylolpropantriglycidylether oder ein cycloaliphatisches Epoxidharz verwendet wird.

**5.** Verfahren nach Anspruch 1, dadurch gekennzeichnet, dass als Komponente (B) ein Gemisch eingesetzt wird, das als Komponente (a) eine Verbindung der Formel V, VI oder VII enthält

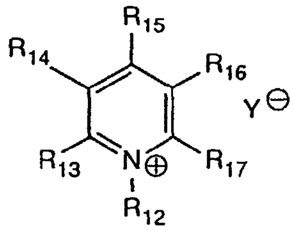 (V), 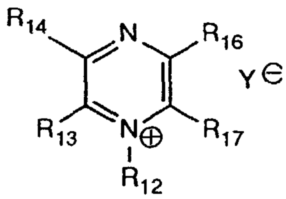 (VI), 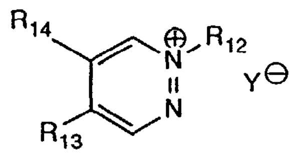 (VII),

worin $R_{12}$ $C_1$-$C_{12}$-Alkyl, $C_7$-$C_{20}$-Aralkyl, $C_3$-$C_{15}$-Alkoxyalkyl oder Benzoylmethyl ist, $R_{13}$, $R_{14}$, $R_{15}$, $R_{16}$ und $R_{17}$ unabhängig voneinander Wasserstoff, $C_1$-$C_4$-Alkyl oder Phenyl bedeuten, oder $R_{13}$ und $R_{14}$ oder $R_{14}$ und $R_{15}$ oder $R_{15}$ und $R_{16}$ oder $R_{16}$ und $R_{17}$ zusammen mit den beiden C-Atomen, an die sie gebunden sind, einen annelierten Benzo-, Naphtho-, Pyridino- oder Chinolinrest bedeuten, und Y für $BF_4$, $PF_6$, $SbF_6$, $SbF_5(OH)$ oder $AsF_6$ steht.

6. Verfahren nach Anspruch 1, dadurch gekennzeichnet, dass als Komponente (B) ein Gemisch eingesetzt wird, das als Komponente (a) N-Benzylchinoliniumhexafluoroantimonat enthält.

7. Verfahren nach Anspruch 1, dadurch gekennzeichnet, dass als Komponente (B) ein Gemisch eingesetzt wird, das als Komponente (b) 1,1,2,2-Tetraphenyl-1,2-ethandiol enthält.

8. Verfahren nach Anspruch 1, dadurch gekennzeichnet, dass die Komponente (B) in einer Menge von 0,05-8,0 Gew.-Teilen, bezogen auf 100 Gew.-Teile der Komponente (A), eingesetzt wird.

## Claims

1. A process for fixing wire windings by trickling an impregnating resin on to the heated rotating winding or by dipping the heated rotating winding in a bath filled with an impregnating resin, which process comprises using as impregnating resin a composition comprising

   (A) an epoxy resin and
   (B) a heat-activatable initiator consisting of a mixture comprising

      (a) at least one quaternary ammonium salt of an aromatic-heterocyclic compound which contains 1 or 2 nitrogen atoms and of a complex halide anion selected from the group consisting of $BF_4^{\blacklozenge}$,$PF_6^{\blacklozenge}$, $SbF_6^{\blacklozenge}$, $Sbf_5(OH)^{\blacklozenge}$ and $AsF_6^{\blacklozenge}$, and
      (b) at least one thermal radical former (b1), (b2), (b3) or (b4), where

         (b1) is a diarylethane derivative of formula III

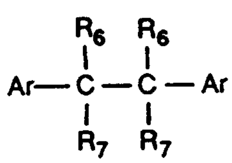 (III),

in which Ar is phenyl, naphthyl, or $C_1$-$C_4$alkyl- or chloro-substituted phenyl,
$R_6$ is hydroxy, $C_1$-$C_4$alkoxy, -O-CO-$R_8$ or -OSi$R_9R_{10}R_{11}$, where $R_8$ is $C_1$-$C_8$alkyl or phenyl and $R_9$, $R_{10}$ and $R_{11}$ are each independently of one another $C_1$-$C_4$alkyl or phenyl, and
$R_7$ is $C_1C_4$alkyl or cyclohexyl or has the same meaning as Ar,
(b2) is an oligomer of formula IV

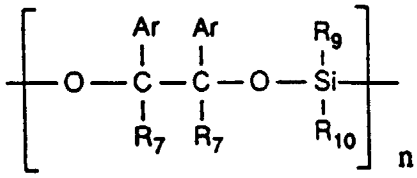

(IV),

in which Ar, $R_7$, $R_9$ and $R_{10}$ have the same meaning as in formula II and n is 2-20,
(b3) is an organic peroxy compound, and
(b4) is a quinone.

2. A process according to claim 1, wherein component (A) is an epoxy resin based on the diglycidyl ether of bisphenol A, the diglycidyl ether of bisphenol F or a mixture of the diglycidyl ethers of bisphenol A and bisphenol F.

3. A process according to claim 1, wherein component (A) is an epoxy resin based on diglycidyl phthalate, diglycidyl hexahydrophthalate or triglycidyl trimellitate.

4. A process according to claim 1, wherein component (A) is an epoxy resin based on trimethylolpropane triglycidyl ether or a cycloaliphatic epoxy resin.

5. A process according to claim 1, wherein component (B) is a mixture in which component (a) is a compound of formula V, VI or VII

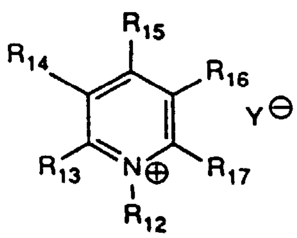 (V), 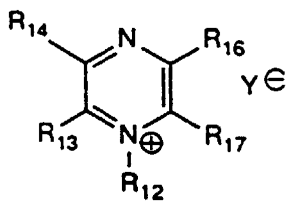 (VI), 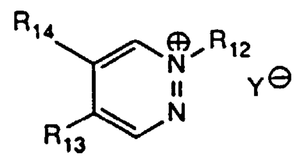 (VII),

in which $R_{12}$ is $C_1$-$C_{12}$alkyl, $C_7$-$C_{20}$aralkyl, $C_3$-$C_{15}$alkoxy-alkyl or benzoylmethyl, $R_{13}$, $R_{14}$, $R_{15}$, $R_{16}$ and $R_{17}$ are each independently of one another hydrogen, $C_1$-$C_4$alkyl or phenyl, or $R_{13}$ and $R_{14}$ or $R_{14}$ and $R_{15}$ or $R_{15}$ and $R_{16}$ or $R_{16}$ and R17, together with the two carbon atoms to which they are attached, form a fused-on benzo, naphtho, pyridino or quinolino ring, and Y is $BF_4$, $PF_6$, $SbF_6$, $SbF_5(OH)$ or $AsF_6$.

6. A process according to claim 1, wherein component (B) is a mixture in which component (a) is N-benzylquinolinium hexafluoroantimonate.

7. A process according to claim 1, wherein component (B) is a mixture in which component (b) is 1,1,2,2-tetraphenyl-1,2-ethanediol.

8. A process according to claim 1, wherein component (B) is used in an amount of 0.05-8.0 parts by weight, based on 100 parts by weight of component (A).

**Revendications**

1. Procédé pour fixer des enroulements de fil par application en gouttes d'une résine d'imprégnation sur l'enroulement de fil réchauffé, en rotation, ou par trempage de l'enroulement de fil réchauffé, en rotation, dans un bac rempli d'une résine d'imprégnation, caractérisé en ce que l'on utilise en tant que résine d'imprégnation une composition contenant

A) une résine époxyde et

B) un amorceur activable par la chaleur constitué d'un mélange comportant

(a) au moins un sel ammonium quaternaire d'un composé aromatique-hétérocyclique, lequel contient 1 ou 2 atomes d'azote, et un anion halogénure complexe pris dans le groupe constitué de $BF_4^{\ominus}$, $PF_6^{\ominus}$, $SbF_6^{\ominus}$, $SbF_6(OH)^{\ominus}$ et $AsF_6^{\ominus}$, et
(b) au moins un formateur de radicaux thermique (b1), (b2), (b3) ou (b4),

(b1) représentant un dérivé de diaryléthane de formule III

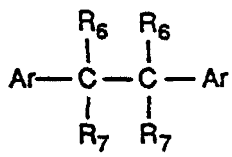

(III),

dans laquelle Ar représente un groupe phényle, naphtyle ou phényle substitué par des substituants alkyle en $C_1$-$C_6$ ou chlore,
$R_6$ représente des groupes hydroxy, alkoxy en $C_1$-$C_4$, -O-CO-$R_8$ ou $OSiR_9R_{10}R_{11}$, où $R_8$ représente un groupe alkyle en $C_1$-$C_8$ ou phényle et $R_9$, $R_{10}$ et $R_{11}$ représentent, indépendamment les uns des autres, des groupes alkyle en $C_1$-$C_4$ ou phényle et
$R_7$ représente des groupes alkyle en $C_1$-$C_4$ ou cyclohexyle ou possède la même signification que Ar,
(b2) représente un composé oligomère de formule IV

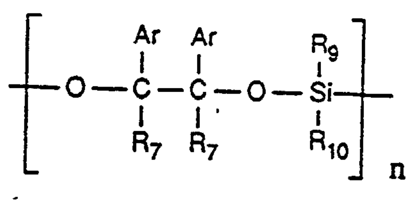

(IV),

dans laquelle Ar, $R_7$, $R_9$ et $R_{10}$ présentent les mêmes significations qu'à la formule II et n va de 2 à 20,
(b3) représente un composé peroxy organique et
(b4) est une quinone.

2. Procédé selon la revendication 1, caractérisé en ce que l'on utilise comme composant (A) une résine époxyde à base d'éther diglycidylique du bisphénol A, d'éther diglycidylique du bisphénol F ou d'un mélange d'éther diglycidylique du bisphénol A et d'éther diglycidylique du bisphénol F.

3. Procédé selon la revendication 1, caractérisé en ce que l'on utilise comme composant (A) une résine époxyde à base d'ester diglycidylique de l'acide phtalique, d'ester diglycidylique de l'acide hexahydro-phtalique ou d'ester diglycidylique de l'acide trimellitique.

4. Procédé selon la revendication 1, caractérisé en ce que l'on utilise comme composant (A) une résine époxyde à base d'éther triglycidylique du triméthylol-propane ou d'une résine époxyde cycloaliphatique.

5. Procédé selon la revendication 1, caractérisé en ce que l'on utilise comme composant (B) un mélange lequel contient en tant que composant (a) un composé de formule V, VI ou VII

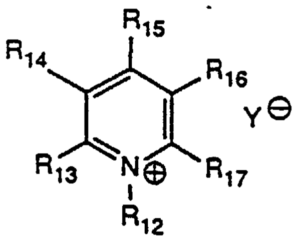 (V), 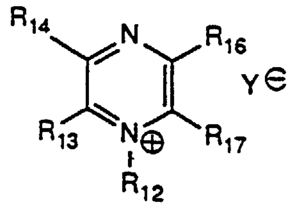 (VI), 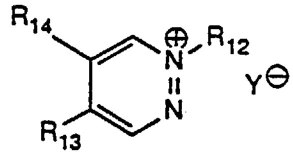 (VII),

dans lesquelles $R_{12}$ représente des groupes alkyle en $C_1$-$C_{12}$, aralkyle en $C_7$-$C_{20}$, alkoxyalkyle en $C_3$-$C_{15}$ ou benzoylméthyle, $R_{13}$, $R_{14}$, $R_{15}$, $R_{16}$ et $R_{17}$ représentent, indépendamment les uns des autres, un atome d'hydrogène, des groupes $C_1$-$C_4$ ou phényle, ou $R_{13}$ et $R_{14}$ ou $R_{14}$ et $R_{15}$ ou $R_{15}$ et $R_{16}$ ou $R_{16}$ et $R_{17}$ forment, ensemble avec les deux atomes de carbone auxquels ils sont liés, un reste condensé benzo, naphto, pyridino ou quinoléino, et Y représente $BF_4$, $PF_6$, $SbF_6$, $SbF_5(OH)$ ou $AsF_6$.

**6.** Procédé selon la revendication 1, caractérisé en ce que l'on utilise comme composant (B) un mélange lequel contient l'hexafluoroantimoniate de N-benzyl-quinolinium en tant que composant (a).

**7.** Procédé selon la revendication 1, caractérisé en ce que l'on utilise comme composant (B) un mélange lequel contient le 1,1,2,2-tétraphényl-1,2-étanediol en tant que composant (b).

**8.** Procédé selon la revendication 1, caractérisé en ce que l'on emploie le composant (B) dans une quantité de 0,05 à 8,0 parties en poids, par rapport à 100 parties en poids du composant (A).